Europäisches Patentamt

European Patent Office

Office européen des brevets

(19)

(11) Publication number: **0 377 758 B1**

(12) **EUROPEAN PATENT SPECIFICATION**

(45) Date of publication of patent specification: **05.10.94**  (51) Int. Cl.⁵: **C04B 35/58**

(21) Application number: **89908262.2**

(22) Date of filing: **07.07.89**

(86) International application number:
**PCT/JP89/00687**

(87) International publication number:
**WO 90/00531 (25.01.90 90/03)**

(54) **SILICON NITRIDE TYPE SINTERED BODY AND PROCESS FOR ITS PRODUCTION.**

(30) Priority: **08.07.88 JP 170490/88**

(43) Date of publication of application:
**18.07.90 Bulletin  90/29**

(45) Publication of the grant of the patent:
**05.10.94 Bulletin  94/40**

(84) Designated Contracting States:
**DE FR GB IT SE**

(56) References cited:
**EP-A- 0 124 989**
**JP-A- 5 874 572**
**JP-A-63 218 584**
**JP-B- 638 071**

(73) Proprietor: **NIPPON TUNGSTEN CO., LTD.**
**20-31, Shimizu 2-chome**
**Minami-ku**
**Fukuoka-shi**
**Fukuoka 815 (JP)**

(72) Inventor: **FURUKAWA, Mitsuhiko, Nippon**
**Tungsten Co., Ltd.**
**20-31, Shimizu 2-chome**
**Minami-ku**
**Fukuoka-shi Fukuoka 815 (JP)**
Inventor: **SHIROYAMA, Masaharu, Nippon**
**Tungsten Co., Ltd.**
**20-31, Shimizu 2-chome**
**Minami-ku**
**Fukuoka-shi Fukuoka 815 (JP)**
Inventor: **NAGANO, Mitsuyoshi, Nippon Tung-**
**sten Co., Ltd.**
**20-31, Shimizu 2-chome**
**Minami-ku**
**Fukuoka-shi Fukuoka 815 (JP)**
Inventor: **TAKANO, Yasumi, Nippon Tungsten**
**Co., Ltd.**
**20-31, Shimizu 2-chome**
**Minami-ku**
**Fukuoka-shi Fukuoka 815 (JP)**

(74) Representative: **Müller-Boré & Partner Paten-**
**tanwälte**
**Postfach 26 02 47**
**D-80059 München (DE)**

EP 0 377 758 B1

## Description

The present invention concerns a silicon nitride type material with much less deterioration of strength at high temperature and suitable for super-high speed cutting tools or high temperature structural material.

Heretofore, as $Si_3N_4$ material, those described in, for example, Japanese Patent Unexamined Publication (KOKAI) Sho 49-21091, Sho 57-95873, Sho 59-182276, etc. have been known.

As the production process for them, there are a production method for $\beta$-$Si_3N_4$ in $Si_3N_4$-$Y_2O_3$-$Al_2O_3$ system adding $Y_2O_3$ and $Al_2O_3$ or in $Si_3N_4$-$Y_2O_3$-MgO-$Al_2O_3$ by adding $Y_2O_3$-MgO-$Al_2O_3$ as the sintering aid, as well as a production method for $\alpha'$-$Si_3N_4$ and $\beta$-$Si_3N_4$ in $Si_3N_4$-$Y_2O_3$-AlN series $\alpha$-sialon or $Si_3N_4$-$Y_2O_3$-$Al_2O_3$-AlN series by adding $Y_2O_3$-AlN.

However, a glass phase comprising Si, N and additive ingredient is present between $Si_3N_4$ particles, which bind crystal grains of $Si_3N_4$ in any of the sintered bodies.

The glass phase is softened at high temperature to reduce the strength. That is, the deterioration of the strength is remarkable at a temperature higher than 800°C and the strength is reduced to about one-half, in view of normal temperature bending strength, at a temperature higher than 1200°C.

For preventing the strength deterioration at high temperature, $Si_3N_4$ series material free from glass phase, for example, solid-solution type $Si_3N_4$ such as $\beta$-sialon or reaction sintered $Si_3N_4$ compound of $Si_3N_4$ alone may be satisfactory. However, although these materials show less deterioration of strength at high temperature, the strength itself is low at normal temperature and they are not suitable for structural material and tool material.

As for other means, although it is possible to prevent softening at high temperature by crystallizing the glass phase, this requires heat treatment in addition to sintering to make the steps complete.

EP-A-0 124 989 discloses a $Si_3N_4$ sintered body of the $Si_3N_4$-$Y_2O_3$-$Al_2O_3$-AlN type, optionally further comprising less than 5% by weight of at least $TiO_2$/MgO/$ZrO_2$. The $Si_3N_4$ sintered body has $\alpha'$ and $\beta$ phases or, optionally, $\alpha'$, $\beta$ and Si-rare earth element-Al-O-N phases (referred to as "x" phases) wherein the $\alpha'$ to $\beta$ phase ratio is 0.05-0.7 : 0.95-0.3 or in the three-phase option the ratio of the $\alpha'$phase to the total of a', $\beta$ and "x" is 0.01-0.7 : 1.

The principal object of the present invention is to obtain silicon nitride material having bending strength at normal temperature comparable with that of usual silicon nitride having a glass phase and, in addition having much less deterioration of strength at high temperature.

According to the present invention, the foregoing object has been attained by using a $Y_2O_3$-MgO-AlN system as a sintering aid and controlling the stoichiometrical ratio of Y, Mg, Al in the sintered body within a specific range.

That is, in accordance with the present invention, it is possible to obtain silicon nitride material having a bending strength at normal temperature of not less than $9.806 \cdot 10^8$ Pa (100 kg/mm$^2$), which is comparable with that of usual $\beta$-$Si_3N_4$ having a glass phase and with much less deterioration of the strength such as deterioration of the strength at high temperature of not greater than 10% at 1000°C and 20% at 1200°C as compared with usual material, by controlling the number of moles of Y, Mg and Al present in the sintered body of $Si_3N_4$-$Y_2O_3$-MgO-AlN series.

As the specific condition in the stoichiometrical ratio of Y, Mg and Al in the sintered body described above, the following three conditions are to be satisfied:

(1)     $0.1 \leq A_1 + B_1 + C_1 \leq 0.4$

(2)     $0.2 < B_1/A_1 < 1.2$

(3)     $-0.03 \leq C_1 - (A_1 + B_1) \leq 0.03$

where $A_1$, $B_1$ and $C_1$ represent the number of moles of Y, Mg and Al, respectively, per one mole of $Si_3N_4$.

In the silicon nitride type sintered body according to the present invention, the strength of the sintered body can be improved by admixing and dispersing the particles of titanium carbide, nitride and carbonitride. Since they cause no reactions such as solid solution with $Si_3N_4$ or sintering aids, they function as a dispersion improver, by which toughness is improved. The grain size is, desirably, less than 1 $\mu$m.

For production process according to the present invention, while a sintered body excellent in high temperature strength and easy sinterability can be obtained by a specific composition range, there are several conditions also in the production. They are use of an organic solvent as a solvent upon mixing pulverization and use of starting powder with the grain size of less than 1 $\mu$m.

According to the present invention, it is possible to obtain a silicon nitride sintered body having a bending strength at normal temperature comparable with that of usual silicon nitride having a glass phase and less deterioration in the strength at high temperature.

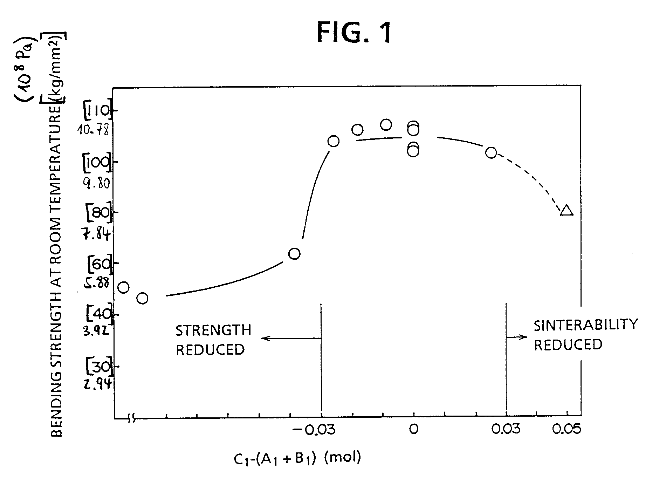

Figs. 1 - 4 are diagrams illustrating the characteristics of the sintered body according to the present invention.

Fig. 1 is a diagram showing the effect to the bending strength at room temperature, of molar ratio for each of Y, Mg and Al defined as: $Y = A_1$, $Mg = B_1$ and $Al = C_1$ in a $Si_3N_4$-$Y_2O_3$-MgO-AlN sintered body applied with HIP processing at 1650°C after preliminary sintering in $N_2$ gas at 1700°C. The ordinate indicates the bending strength (Pa) [(kg/mm$^2$)] at a room temperature.

That is, as shown in Fig. 1, it can be seen that the bending strength at a room temperature is high within a range of $C_1 - (A_1 + B_1)$ of not less than -0.03 mole and not greater than 0.03 mole. That is, the sinterability is improved within the range making ordinary sintering possible and increasing the strength at a room temperature. Contrarily, if it exceeds 0.03 mole, the sinterability is remarkably reduced making it impossible for ordinary sintering but sintering is possible only by hot pressing. Further, if it is less than 0.03 mole, although the sinterability is preferred, the strength at a room temperature is low to deteriorate the characteristics of high strength as the merit of $Si_3N_4$ series and it is not suitable as the structural material.

Within the range of the present invention, it is considered for the behavior of Y, Mg and Al in the sintered body that $\beta$-$Si_3N_4$ phase is formed in $Si_3N_4$ + $Y_2O_3$ + MgO + (Al in AlN) and $\alpha$-$Si_3N_4$ phase is formed in $Si_3N_4$ + $Y_2O_3$ + MgO + AlN, in which the respective sintering aids are partially solid solubilized and partially forms, a glass phase.

In the course of the formation, if MgO is used in excess ($B_1/A_1 > 1.2$), $\alpha$-$Si_3N_4$ phase in which Mg is excessively solid-solubilized is formed and to reduce the strength since this phase comprises granular crystals not acicular crystals of $\beta$-$Si_3N_4$ phase with high strength. Contrarily, if MgO is insufficient ($B_1/A_1 > 0.2$) sinterability is lowered. Accordingly, the range should be $1.2 \geq B_1/A_1 \geq 0.2$.

Further, the total amount of the sintering aids is from 0.1 to 0.4 mole based on one mole of $Si_3N_4$. The sinterability is poor if it is less than 0.1 mole and, on the other hand, no sufficient strength can be obtained in the mechanical property, in particular, bending strength due to the increase of bind glass phase at the crystal grain boundary if it exceeds 0.4 mole.

In the region of the composition as described above, the state of the crystal phase as expressed by the ratio by volume of $\alpha$-$Si_3N_4$ phase and $\beta$-$Si_3N_4$ phase is:

$$0.05 < \frac{\alpha}{\alpha + \beta} < 0.5$$

In the present invention, the addition amount of $Al_2O_3$ often used as the sintering aid is zero.

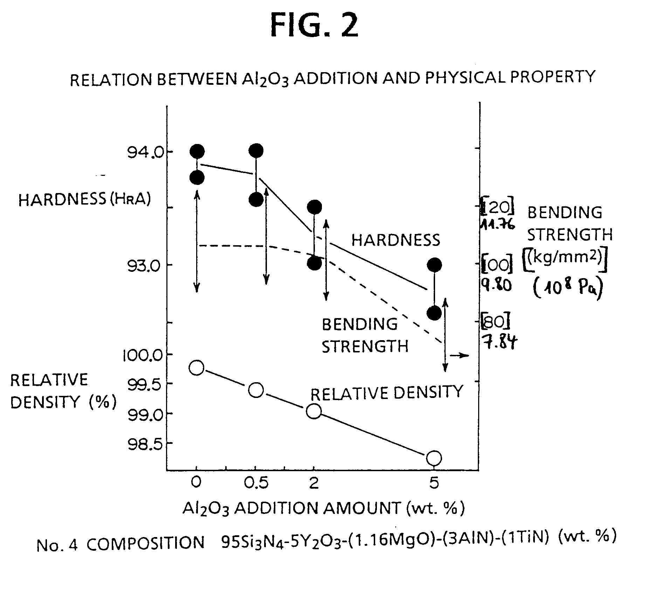

Fig. 2 shows the effect, to the mechanical property, in a case where $Al_2O_3$ is added to 95$Si_3N_4$-5$Y_2O_3$-(1.16MgO)-(3AlN)-(1TiN) (here and hereinafter based on weight % and the value in each of the blanks shows a ratio exceeding 100 (external ratio). In this experiment, $Si_3N_4$-$Y_2O_3$ is assumed as 100 and other additives are added by the ratio as indicated. As can be seen from the figure, the relative density is decreased and the bending strength is reduced along with the increase of the addition amount.

That is, the presence of $Al_2O_3$ is not referred in the present composition and it is considered that $Al_2O_3$ forms $\beta$-$Si_3N_4$ while forming a glass phase with $Si_3N_4$, $Y_2O_3$, MgO, etc. proceeding to AlN. As a result, $\alpha$ ratio and relative density are lowered and thereby reducing the hardness and the strength.

Further, strength of the sintered body can be improved by adding and blending the particles of titanium carbide, nitride and carbonitride. Since they cause no reactions such as solid solution with $Si_3N_4$ or sintering aids, they function as a dispersion improver thereby improving the toughness. Their grain size is preferably of not greater than 1 $\mu$m.

If the grain size is not greater than 1 $\mu$m it shows an effect of suppressing the grain growth of $Si_3N_4$ and contributes to the improvement of the strength and hardness as the dispersion improver. However, if the grain size exceeds 1 $\mu$m, the function as the dispersing improver is reduced to provide only poor improvement for the strength and the hardness.

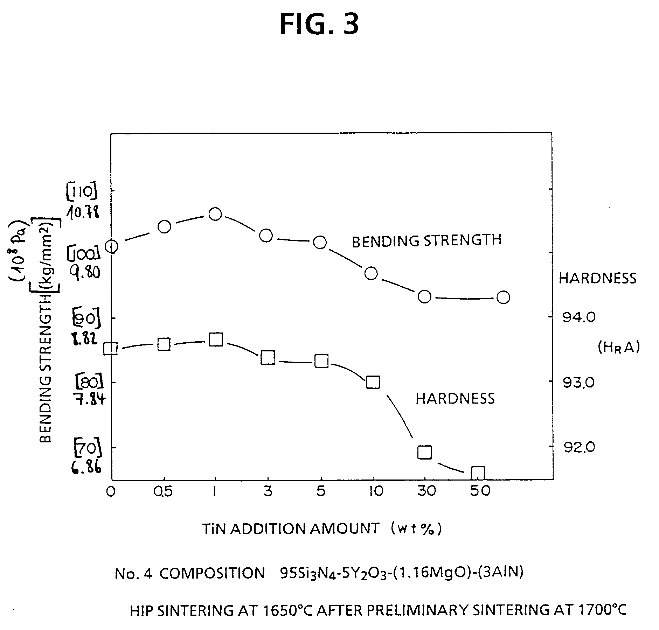

Fig. 3 shows the effect of the addition amount in a case where TiN is added, as a dispersant, to 95$Si_3N_4$-5$Y_2O_3$-(1.16MgO)-(3AlN) as the base. As shown in the figure, the bending strength is improved if the addition amount is from 0.5 to 5 % by weight.

The composition of the present invention contains AlN, which reacts with water to form ammonia and, at the same time, it is partially oxidized to form Al-oxide. That is, if the composition is mixed with an aqueous

3

solvent, the effect of AlN addition is eliminated to show the same nature as the addition of $Al_2O_3$. Accordingly, the suitable solvent is an organic solvent, preferably, methanol or ethanol for preventing oxidation of AlN.

Referring to the grain size of the starting powder, there is certain a relationship between the strength and the starting powder in the composition according to the present invention and the smaller grain size is preferred for all of $Si_3N_4$, $Y_2O_3$, MgO and AlN. In particular, the average grain size of $Si_3N_4$ and $Y_2O_3$ is not greater than 1 $\mu$m and the grain size of $Si_3N_4$ is, preferably, not greater than 0.5 $\mu$m, because the dispersibility of the powdery particles, solid solubilization and formation of the glass phase are considered to be promoted when the grain size is smaller.

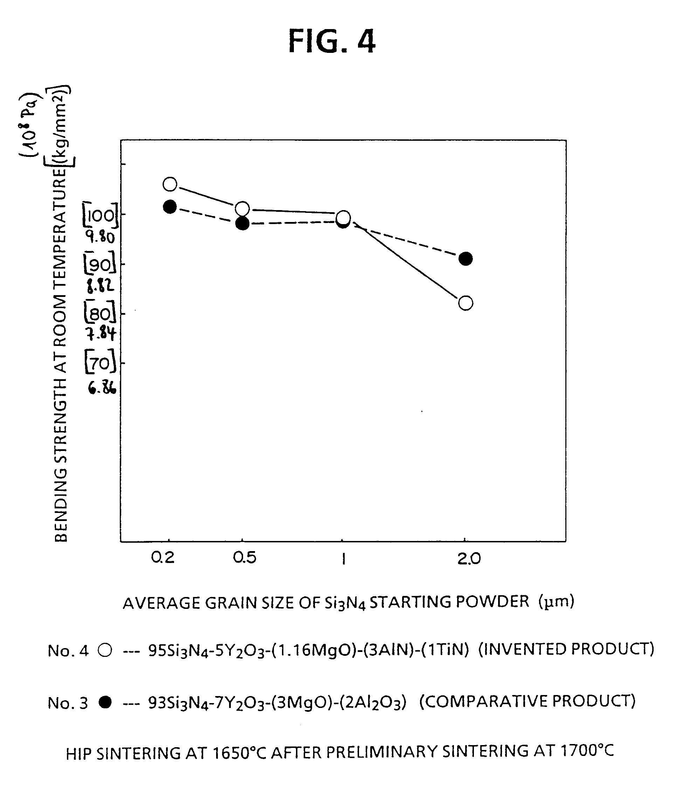

Fig. 4 shows the dependency of the bending strength on the grain size of $Si_3N_4$. As can be seen from Fig. 4, the effect to the bending strength due to the difference of the average grain size of the $Si_3N_4$ starting powder is not remarkable in No. 3 as usual $\beta$-$Si_3N_4$, but the bending strength is abruptly reduced if the average grain size exceeds 1 $\mu$m in No. 4 as the product according to the present invention. Accordingly, within the composition range of the present invention, the average grain size of the $Si_3N_4$ starting powder has to be not greater than 1 $\mu$m, and, preferably, not greater than 0.5 $\mu$m.

A predetermined amount of $Y_2O_3$-MgO-AlN was added to an $\alpha$-$Si_3N_4$ powder with an average grain size of 0.2 $\mu$m, to which TiN or TiC powder with an average grain size of 0.4 $\mu$m was further added and they were charged together with $ZrO_2$ balls into a rubber-lined pot and pulverized and mixed for 40 hours using methanol as a solvent.

Then, the resultant slurry was spray dried with the addition of organic binder by a closed type spray drier. The resultant pelletized powder was press molded into 10 $\times$ 50 $\times$ 5 mm, removed with the binder and then maintained at 1.013 bar (1 atm.) of $N_2$ gas, at a sintering temperature of 1650 - 1750 °C for 2 hours to obtain a sintered body having a theoretical density of not less than 95%.

The product was further treated by hot isostatic pressing (HIP) under $N_2$ gas at 1600 °C - 1519.5 bar (1500 atm.) and served for various evaluations for physical property and characteristics. Hot press sintering was applied to those impossible for usual sintering under the conditions at a temperature of 1720 ± 20 °C, under a pressure of $1.961 \cdot 10^7$ Pa (200 kg/cm²), for a time of 100 min in $N_2$ gas.

In the same way, a cut tip of a shape according to JIS SNGN432 was prepared and used for cutting test.

The compositions of the test specimens and the results of the test are shown in the appended table.

As can be seen from the table, remarkable improvement was recognized in the high temperature characteristics of the sintering material according to the present invention as compared with conventional $Si_3N_4$-$Y_2O_3$-$Al_2O_3$ series or $Si_3N_4$-MgO-$Al_2O_3$ series or $\beta$-sialon series.

Nos. 17 - 20 used for comparison have the crystal phase ratio in the sintered body of:

$$\frac{\alpha}{\alpha + \beta}$$

within a range:

$$0.05 \leqq \frac{\alpha}{\alpha + \beta} \leqq 0.5$$

and have rather improved strength.

However, as a result of measuring the high temperature strength with those impossible for normal pressure sintering and sintered by hot pressing, although the strength at high temperature was excellent as compared with $Si_3N_4$-$Y_2O_3$-$Al_2O_3$ series or $Si_3N_4$-MgO-$Al_2O_3$ series, sintering was impossible under normal pressure sintering and sintering was applied by hot pressing. It can also be seen from the above that the smaller addition amount of $Al_2O_3$ is preferred.

This examples show the addition of 1 % by weight of TiN but it has also been found that the strength could be improved similarly by the use of TiC.

4

Table 1

| | | | Comparative product | | | Invented product | | |
|---|---|---|---|---|---|---|---|---|
| | | No. | 1 | 2 | 3 | 4 | 5 | 6 |
| Composition | Balance | $Si_3N_4$ | 95 | 100 | 93 | 95 | 93 | 93 |
| | wt(%) | $Y_2O_3$ | 5 | | 7 | 5 | 7 | 7 |
| | External ratio | MgO | | 5 | 3 | 1.16 | 1.16 | 1.62 |
| | | AlN | | | | 3 | 3.73 | 4.20 |
| | | $Al_2O_3$ | 2 | 2 | 2 | | | |
| | | TiN | | | | 1 | 1 | 1 |
| | mol | $C_1-(A_1+B_1)$ | | | | 0 | 0 | 0 |
| | | $A_1+B_1+C_1$ | | | | 0.22 | 0.27 | 0.30 |
| | | $B_1/A_1$ | | | | 0.66 | 0.47 | 0.66 |
| Relative density | | | (98.6) | 99.0 | 99.0 | 99.5 | 99.4 | 99.6 |
| α ratio $[\alpha/(\alpha+\beta)]$ | | | 0 | 0 | 0 | 26.7 | 39.8 | 45.9 |
| Hardness $H_RA$ | | | | | | 93.5 | 93.8 | 94.0 |
| Bending Strength $[kg/mm^2]$ $(10^6 P_a)$ | | Room Temperature | [98] 961.01 | [82] 804.1 | [103] 1010.0 | [106] 1039.4 | [105] 1029.6 | [102] 1000.2 |
| | | 1000°C | [55] 539.33 | [59] 578.6 | [68] 666.8 | [97] 951.2 | [98] 960.8 | [97] 951.2 |
| | | 1200°C | [43] 421.7 | [47] 460.9 | [52] 509.9 | [82] 804.1 | [83] 813.9 | [85] 833.5 |
| | | Wear *1 Resistance | ○ | △ | ○ | ◎ | ◎ | ◎ |
| | | Chipping *2 Resistance | ◎ | ○ | ◎ | ◎ | ◎ | ◎ |

*1 Wear resistance FC-25 cutting
Circumferential speed V: 600m/min,
Feed: 0.25 mm/rev. Recess: 1.5 mm
Cutting time to 0.5 mm of flank wear
◎: more than 30 min, ○: 20 - 30 min, △: less than 20 min.

*2 Chipping-resistance FCD-60
Circumferential speed V: 250 m/min, Recess d: 1.5 mm Feed upto evaluated chipping
◎: more than 0.8 mm/rev. ○: 0.5 - 0.7 mm/rev.
Values in the blanks are for hot press sintering product: Normal pressure sintering
impossible

Table 2

| | | | | Invented product | | | | |
|---|---|---|---|---|---|---|---|---|
| | | | No. | 7 | 8 | 9 | 10 | 11 |
| Composition | | Balance | $Si_3N_4$ | 95 | 95 | 95 | 95 | 96 |
| | wt(%) | | $Y_2O_3$ | 5 | 5 | 5 | 5 | 4 |
| | | External ratio | MgO | 1.8 | 1.6 | 1.4 | 0.7 | 0.93 |
| | | | AℓN | 3 | 3 | 3 | 3 | 2.4 |
| | | | $Aℓ_2O_3$ | | | | | |
| | | | TiN | 1 | 1 | 1 | 1 | 1 |
| | moℓ | | $C_1-(A_1+B_1)$ | -0.024 | -0.017 | -0.009 | 0.017 | 0 |
| | | | $A_1+B_1+C_1$ | 0.24 | 0.23 | 0.22 | 0.20 | 0.17 |
| | | | $B_1/A_1$ | 1.01 | 0.90 | 0.79 | 0.40 | 0.66 |
| Relative density | | | | 99.5 | 99.5 | 99.6 | 99.5 | 99.6 |
| α ratio $[α/(α+β)]$ | | | | 30.8 | 31.6 | 28.6 | 23.2 | 26.1 |
| Hardness $H_RA$ | | | | 93.6 | 93.9 | 93.5 | 93.4 | 93.6 |
| Bending Strength $[(kg/mm^2)]$ $(10^6 Pa)$ | | | Room Temperature | [107] 1049.2 | [106] 1039.4 | [107] 1049.2 | [102] 1000.2 | [102] 1000.2 |
| | | | 1000°C | [103] 1049.0 | [99] 970.8 | [95] 931.6 | [97] 951.2 | [96] 941.4 |
| | | | 1200°C | [92] 902.2 | [89] 872.7 | [88] 862.9 | [82.5] 809.9 | [81] 794.3 |
| | | | Wear *1 Resistance | ○ | ○ | ◎ | ◎ | ◎ |
| | | | Chipping *2 Resistance2 | ◎ | ◎ | ◎ | ◎ | ◎ |

*1 Wear resistance FC-25 cutting
   Circumferential speed V: 600m/min,
   Feed: 0.25 mm/rev.  Recess: 1.5 mm
   Cutting time to 0.5 mm of flank wear
   ◎: more than 30 min,   ○: 20 - 30 min,   △: less than 20 min.

*2 Chipping-resistance FCD-60
   Circumferential speed V: 250 m/min,   Recess d: 1.5 mm  Feed upto evaluated chipping
   ◎: more than 0.8 mm/rev.  ○: 0.5 - 0.7 mm/rev.
   Values in the blanks are for hot press sintering product: Normal pressure sintering
                                                              impossible

Table 3

| | | | | Out of the range | | | | |
|---|---|---|---|---|---|---|---|---|
| | | | No. | 12 | 13 | 14 | 15 | 16 |
| Composition | | Balance | $Si_3N_4$ | 97 | 95 | 95 | 98 | 95 |
| | wt(%) | External ratio | $Y_2O_3$ | 3 | 5 | 5 | 2 | 5 |
| | | | MgO | 0.5 | 5 | 0.3 | 5 | 2 |
| | | | AℓN | 1 | 3 | 3 | 3 | 3 |
| | | | $Aℓ_2O_3$ | | | | | |
| | | | TiN | 1 | 1 | 1 | 1 | 1 |
| | moℓ | | $C_1-(A_1+B_1)$ | −0.021 | −0.142 | −0.032 | −0.099 | −0.031 |
| | | | $A_1+B_1+C_1$ | 0.09 | 0.36 | 0.18 | 0.31 | 0.25 |
| | | | $B_1/A_1$ | 0.47 | 2.83 | 0.17 | 7.06 | 1.13 |
| | Relative density | | | (99.7) | 99.7 | (99.5) | 99.7 | 99.5 |
| | α ratio [α/(α+β)] | | | (12.0) | 87.2 | (31.5) | 92.8 | 50.2 |
| | Hardness $H_RA$ | | | (92.9) | 94.6 | (93.8) | 94.5 | 93.5 |
| | Bending Strength $[(kg/mm^2)]$ $(10^6 Pa)$ | | Room Temperature | [98] (961.0) | [52] 509.9 | [101] (990.4) | [49] 480.5 | [63] 617.7 |
| | | | 1000°C | | | | | [52] 509.9 |
| | | | 1200°C | | | | | [42] 411.9 |
| | | | Wear *1 Resistance | ○ | ○ | ◉ | ○ | ○ |
| | | | Chipping *2 Resistance | ◉ | ○ | ◉ | ○ | ◉ |

*1 Wear resistance FC-25 cutting
Circumferential speed V: 600m/min,
Feed: 0.25 mm/rev.  Recess: 1.5 mm
Cutting time to 0.5 mm of flank wear
◉: more than 30 min,  ○: 20 - 30 min,  △: less than 20 min.

*2 Chipping-resistance FCD-60
Circumferential speed V: 250 m/min,  Recess d: 1.5 mm  Feed upto evaluated chipping
◉: more than 0.8 mm/rev.  ○: 0.5 - 0.7 mm/rev.
Values in the blanks are for hot press sintering product: Normal pressure sintering
impossible

Table 4

| | | | | Comparative product | | |
|---|---|---|---|---|---|---|
| | | | No. | 17 | 18 | 19 |
| Composition | Balance | | $Si_3N_4$ | 95 | 95 | 95 |
| | wt(%) | Exter-nal ratio | $Y_2O_3$ | 5 | 5 | 5 |
| | | | MgO | 1.16 | 1.16 | 1.16 |
| | | | AℓN | 3 | 3 | 3 |
| | | | $Aℓ_2O_3$ | 0.5 | 2 | 5 |
| | | | TiN | 1 | 1 | 1 |
| | moℓ | | $C_1-(A_1+B_1)$ | | | |
| | | | $A_1+B_1+C_1$ | | | |
| | | | $B_1/A_1$ | | | |
| Relative density | | | | 99.3 | 99.2 | 98.2 |
| α ratio [α/(α+β)] | | | | 24.5 | 12.8 | 7.2 |
| Hardness $H_RA$ | | | | 93.2 | 93.1 | 92.8 |
| Bending Strength $[(kg/mm^2)]$ $(10^6 Pa)$ | | | Room Temperature | [104] 1019.1 | [92] 902.2 | [87] 853.1 |
| | | | 1000°C | [83] 813.9 | [72] 706.0 | [65] 637.4 |
| | | | 1200°C | [75] 735.5 | [63] 617.8 | [51] 500.1 |
| | | | Wear *1 Resistance | ○ | ○ | ○ |
| | | | Chipping *2 Resistance | ◉ | ◉ | ◉ |

*  Wear resistance FC-25 cutting
   Circumferential speed V: 600m/min,
   Feed: 0.25 mm/rev.  Recess: 1.5 mm
   Cutting time to 0.5 mm of flank wear
   ◉: more than 30 min,  ○: 20 - 30 min,  △: less than 20 min.

*2 Chipping-resistance FCD-60
   Circumferential speed V: 250 m/min,  Recess d: 1.5 mm  Feed upto evaluated chipping
   ◉: more than 0.8 mm/rev.  ○: 0.5 - 0.7 mm/rev.
   Values in the blanks are for hot press sintering product: Normal pressure sintering
                                                  impossible

Since the silicon nitride type sintered body according to the present invention has a bending strength at normal temperature comparable with that of the usual silicon nitride having glass phase and shows much less deterioration of strength at high temperature, it is excellent when compared with conventional $Si_3N_4$ type tools in view of wear resistance and chipping resistance for tools suitable to high speed cutting of high tip temperature and can be applied generally as a high temperature structural material.

## Claims

1.  A silicon nitride type sintered body prepared from $Si_3N_4$ and a sintering aid of $Y_2O_3$-Mgo-AlN, having $A_1$ moles of Y, $B_1$ moles of Mg and $C_1$ moles of Al based on one mole of $Si_3N_4$ in the sintered body, wherein each amount of $A_1$, $B_1$ and $C_1$ is greater than zero and chosen to satisfy the following conditions:-

$-0.03 \leq C_1 - (A_1 + B_1) \leq 0.03$ moles; and

$0.1 \leq A_1 + B_1 + C_1 \leq 0.4$ moles; and

$0.2 \leq B_1/A_1 \leq 1.2$

and wherein the crystal phases in the sintered body of $Si_3N_4$ comprise the following:-

an $\alpha$-$Si_3N_4$ phase in which a part of the $Si_3N_4$ phase is replaced by Y, Mg, O and Al; and

a $\beta$-$Si_3N_4$ phase in which a part of the $Si_3N_4$ phase is replaced by Al and O; and

a binding glass phase comprising Si, Al, O, N, Y and Mg, and wherein the ratio between the $\alpha$-$Si_3N_4$ phase and the $\beta$-$Si_3N_4$ phase is:

$5 \leq [\alpha / (\alpha + \beta)] \leq 50$ expressed as percent by volume.

2. The silicon nitride type sintered body of claim 1, wherein particles of titanium carbide, nitride and carbonitride with a grain size of not greater than 1 $\mu$m are added as dispersing improver by 0.5 to 5% by weight with respect to the $Si_3N_4$-$Y_2O_3$-MgO-AlN of claim 1 wherein the amount of $Si_3N_4$-$Y_2O_3$ is assumed as 100% by weight.

3. A process for producing a silicon nitride type sintered body which comprises adding $A_2$ moles of $Y_2O_3$, $B_2$ moles of AlN and $C_2$ moles of MgO per mole of $Si_3N_4$ to a $Si_3N_4$ powder containing not less than 90% by volume of $\alpha$-$Si_3N_4$ phase with an average grain size of not greater than 1.0 $\mu$m, in such a powder blend composition as capable of satisfying the conditions :

$0.08 \leq A_2 + B_2 + C_2 \leq 0.35$ (mole)      (1)

$-0.28 \leq B_2 - (A_2 + C_2) \leq 0.035$ (mole)      (2)

$A_2 > 0, B_2 > 0, C_2 > 0$ (mole)      (3)

$0.4 \leq A_2 \leq 2.4$ (mole)      (4)

pulverizing and mixing them in an organic solvent, and then sintering the powder by means of one of hot press sintering, press sintering in a nitrogen gas atmosphere, normal pressure sintering or hot isostatic pressing in nitrogen gas.

4. The process of claim 3, wherein particles of titanium carbide, nitride or carbonitride with a grain size of not greater than 1 $\mu$m are added as dispersing improver by from 0.5 to 5% by weight with respect to the powder blended powder composition wherein the amount of $Si_3N_4$-$Y_2O_3$ is assumed as 100% by weight.

**Patentansprüche**

1. Gesintertes Erzeugnis vom Siliciumnitridtyp hergestellt aus $Si_3N_4$ und einer $Y_2O_3$-MgO-AlN-Sinterhilfe mit A1 Molen von Y, $B_1$ Molen von Mg und $C_1$ Molen von Al auf der Grundlage eines Mols $Si_3N_4$ in dem gesinterten Erzeugnis, wobei jede Menge von $A_1$, $B_1$ und $C_1$ größer als Null ist und so ausgewählt ist, daß die folgenden Bedingungen erfüllt werden:

$-0,03 \leq C_1 - (A_1 + B_1) \leq 0,03$ Mol; und

$0,1 \leq A_1 + B_1 + C_1 \leq 0,4$ Mol; und

$0,2 \leq B_1/A_1 \leq 1,2$

und wobei die Kristallphasen in dem gesinterten Erzeugnis von $Si_3N_4$ das folgende umfassen:

eine $\alpha$-$Si_3N_4$-Phase, in der ein Teil der $Si_3N_4$-Phase durch Y, Mg, O und Al ersetzt ist; und

eine $\beta$-$Si_3N_4$-Phase, in der ein Teil der $Si_3N_4$-Phase durch Al und O ersetzt ist; und

eine bindende Glasphase umfassend Si, Al, O, N, Y und Mg und wobei das Verhältnis zwischen der $\alpha$-$Si_3N_4$-Phase und der $\beta$-$Si_3N_4$-Phase ist:

$5 \leqq [ \alpha / ( \alpha + \beta ) ] \leqq 50$ ausgedrückt als Volumenprozent.

**2.** Gesintertes Erzeugnis vom Siliciumnitridtyp nach Anspruch 1, wobei die Partikel von Titancarbid, -nitrid und -carbonitrid mit einer Korngröße nicht größer als 1 $\mu$m als Dispergierverbesserer hinzugefügt werden, und zwar in 0,5 bis 5 Gew.-% in bezug auf das $Si_3N_4$-$Y_2O_3$-MgO-AlN nach Anspruch 1, wobei die Menge von $Si_3N_4$-$Y_2O_3$ als 100 Gew.-% angenommen wird.

**3.** Verfahren zum Herstellen eines gesinterten Erzeugnisses vom Siliciumnitridtyp, welches umfaßt: Hinzufügen von $A_2$ Molen $Y_2O_3$, $B_2$ Molen AlN und $C_2$ Molen MgO pro Mol $Si_3N_4$ zu einem $Si_3N_4$-Pulver enthaltend nicht weniger als 90 Vol.-% einer $\alpha$-$Si_3N_4$-Phase mit einer durchschnittlichen Korngröße nicht größer als 1,0 $\mu$m, in solch einer Pulver-Blend-Zusammensetzung, die die Bedingungen erfüllen kann:

$0,08 \leqq A_2 + B_2 + C_2 \leqq 0,35$ (Mol)　　(1)

$- 0,28 \leqq B_2 - (A_2 + C_2) \leqq 0,035$ (Mol)　　(2)

$A_2 > 0, B_2 > 0, C_2 > 0$ (Mol)　　(3)

$0,4 \leqq A_2 \leqq 2,4$ (Mol)　　(4)

Pulverisieren und Einmischen in ein organisches Lösungsmittel und dann Sintern des Pulvers mittels einem von Warmdrucksintern, Drucksintern in einer Stickstoffgasatmosphäre, Normaldrucksintern oder warmem isostatischem Verpressen in Stickstoffgas.

**4.** Verfahren nach Anspruch 3, wobei Partikel von Titancarbid, -nitrid oder -carbonitrid mit einer Korngröße nicht größer als 1 $\mu$m als Dispergierverbesserer hinzugefügt werden, und zwar von 0,5 bis 5 Gew.-% bezüglich der Pulver-verblendeten Pulverzusammensetzung, wobei die Menge von $Si_3N_4$-$Y_2O_3$ als 100 Gew.-% angenommen wird.

**Revendications**

**1.** Corps fritté du type à nitrure de silicium préparé à partir de $Si_3N_4$ et aide de frittage de $Y_2O_3$-MgO-AlN, ayant $A_1$ moles de Y, $B_1$ moles de Mg et $C_1$ moles de Al par rapport à une mole de $Si_3N_4$ dans le corps fritté, dans lequel chaque quantité de $A_1$, $B_1$ et $C_1$ est supérieure à zéro et choisie pour satisfaire les conditions suivantes :

$-0,03 \leqq C_1 - (A_1 + B_1) \leqq 0\ 03$ moles ; et
$0,1 \leqq A_1 + B_1 + C_1 \leqq 0,4$ moles ; et
$0,2 \leqq B_1/A_1 \leqq 1,2$

et dans lequel les phases du cristal dans le corps fritté de $Si_3N_4$ comporte la suite :
une phase $\alpha$-$Si_3N_4$ dans laquelle une partie de la phase $Si_3N_4$ est remplacée par Y, Mg, O et Al ; et
une phase $\beta$-$Si_3N_4$ dans laquelle une partie de la phase $Si_3N_4$ est remplacée par Al et O ; et
une phase de verre liant comportant Si, Al, O, N, Y et Mg, et dans laquelle la proportion entre la phase $\alpha$-$Si_3N_4$ et la phase $\beta$-$Si_3N_4$ est :

$5 \leqq [ \alpha / ( \alpha + \beta)] \leqq 50$ exprimée en pour cent de volume.

**2.** Corps fritté de type à nitrure de silicium de la revendication 1, dans lequel des particules de carbure de titane, de nitrure de titane et de carbonitrure de titane présentant une grosseur de grain inférieure à 1 $\mu$m, sont ajoutées comme améliorant dispersant de 0,5 à 5% en poids en ce qui concerne le $Si_3N_4$-$Y_2O_3$-MgO-AlN de la revendication 1, dans lequel la quantité de $Si_3N_4$-$Y_2O_3$ est supposée être de 100% en poids.

**3.** Procédé pour la production d'un corps fritté de type à nitrure de silicium qui comporte l'addition d'$A_2$ moles de $Y_2O_3$, de $B_2$ moles de AlN et de $C_2$ moles de MgO par mole de $Si_3N_4$ à une poudre de

Si$_3$N$_4$ contenant plus de 90% en volume de phase $\alpha$-Si$_3$N$_4$ avec une grosseur moyenne de grain inférieure à 1,0 $\mu$m, de sorte qu'une composition d'un mélange de poudres soit capable de satisfaire les conditions :

$$0,08 \leq A_2 + B_2 + C_2 \leq 0,35 \text{ (mole)} \qquad (1)$$

$$-0,28 \leq B_2 - (A_2 + C_2) \leq 0,035 \text{ (mole)} \qquad (2)$$

$$A_2 > 0, B_2 > 0, C_2 > 0 \text{ (mole)} \qquad (3)$$

$$0,4 \leq A_2 \leq 2,4 \text{ (mole)} \qquad (4)$$

en les pulvérisant et en les mixant dans un solvant organique, puis en frittant la poudre au moyen d'un parmi le frittage par pression à chaud, le frittage par pression dans une atmosphère de gaz d'azote, le frittage sous pression normale ou la compression isostatique à chaud dans un gaz d'azote.

4. Procédé de la revendication 3, dans lequel des particules de carbure de titane, de nitrure de titane ou de carbonitrure de titane présentant une grosseur de grain inférieure à 1 $\mu$m, sont ajoutées comme améliorant dispersant de 0,5 à 5% en poids en ce qui concerne la composition de poudre mélangée de poudres, dans laquelle la quantité de Si$_3$N$_4$-Y$_2$O$_3$ est supposée être de 100% en poids.

# FIG. 1

# FIG. 2

RELATION BETWEEN $Al_2O_3$ ADDITION AND PHYSICAL PROPERTY

No. 4 COMPOSITION  $95Si_3N_4-5Y_2O_3-(1.16MgO)-(3AlN)-(1TiN)$ (wt. %)

# FIG. 3

No. 4 COMPOSITION  $95Si_3N_4$-$5Y_2O_3$-$(1.16MgO)$-$(3AlN)$

HIP SINTERING AT 1650°C AFTER PRELIMINARY SINTERING AT 1700°C

# FIG. 4

AVERAGE GRAIN SIZE OF $Si_3N_4$ STARTING POWDER (μm)

No. 4 ○ --- $95Si_3N_4$-$5Y_2O_3$-(1.16MgO)-(3AlN)-(1TiN) (INVENTED PRODUCT)

No. 3 ● --- $93Si_3N_4$-$7Y_2O_3$-(3MgO)-(2Al$_2$O$_3$) (COMPARATIVE PRODUCT)

HIP SINTERING AT 1650°C AFTER PRELIMINARY SINTERING AT 1700°C